# EUROPEAN PATENT SPECIFICATION

(11) **EP 1 956 758 B1**
(45) Date of publication and mention of the grant of the patent: **27.06.2012**
(21) Application number: 08150225.4
(22) Date of filing: 14.01.2008
(51) Int. Cl.: H04L 12/28

(54) **Method and apparatus for automatically recognizing a connection of a device to a building management system**
Verfahren und Gerät zur automatischen Erkennung einer Verbindung einer Vorrichtung mit einem Verwaltungssystem für Gebäude
Procédé et appareil pour reconnaître automatiquement une connexion d'un dispositif avec un système de gestion d'immeuble

(30) Priority: 08.02.2007 KR 20070013384
(43) Date of publication of application: 13.08.2008
(73) Proprietor: LG Electronics Inc., Seoul, 150-721 (KR)
(72) Inventor: Kim, Ki-Bum, Seoul (KR); Youn, Sang-Chul, Seoul (KR); Jeon, Duck-Gu, Seoul (KR)
(74) Representative: Vossius & Partner

(56) References cited:
- EP-A1- 1 708 460
- US-A1- 2004 218 591
- US-A1- 2006 095 146

## Description

The present invention relates to a method and apparatus for automatically recognizing a connection of a device to a building management system, and more particularly, to a method and apparatus for automatically recognizing a connection of a device of building management system capable of automatically recognizing a device when the device is connected to or removed from a certain communication port that is built into a BACnet gateway of a building management system, thereby providing convenience to a user and an installer and increasing operational efficiency of the building management system.

EP 1 708 460 A1 discloses industrial communications (INCOM) network systems and in US 2004/0218591 A1 building automation systems are described.

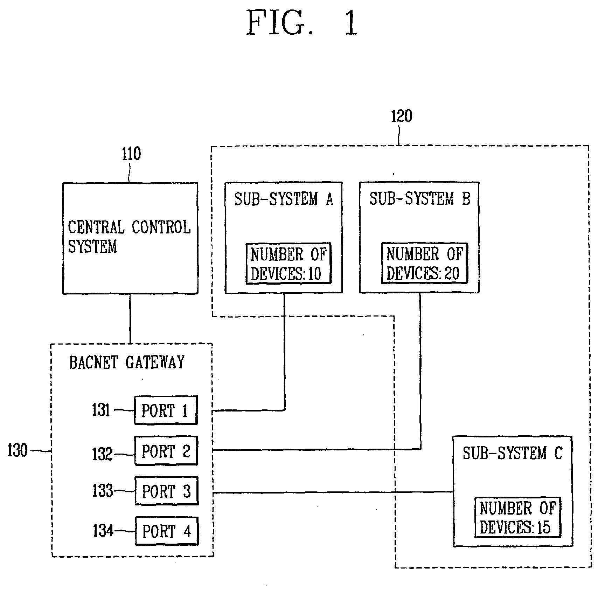

Further, Figure 1 schematically illustrates a structure of a related art building management system.

As shown in Fig. 1, the building management system includes a central control system 110 for performing a central control function for sub-systems, such as power, lighting, etc. that are networked to each other and installed inside a building, a plurality of sub-systems 120 for managing lighting, an air conditioning system, security, etc. of a building, and a BACnet gateway 130 serving as a connection path between the central control system 110 and the sub-systems 120 such that the central control system 110 can centrally control the sub-systems 120.

In addition, the BACnet gateway 130 is provided with a plurality of communication ports 131, 132, 133 and 134 for connecting the plurality of sub-systems 120 with the central control system 110.

In order for the central control system 110 to control or monitor the sub-systems 120, the sub-systems connected to the BACnet gateway 130 and devices included in the sub-systems 120 need to be connected to each of the ports 131, 132, 133 and 134 that are built into the BACnet gateway 130. Further, a resetting operation is required if a new sub-system or device is added or an existing sub-system or device is removed.

In the device recognition method of the related art building management system, when sub-systems or devices are connected to the BACnet gateway 130, the number of connected sub-systems or devices needs to be set in the BACnet gateway 130, and then respective sub-systems or devices should be allotted to each of the ports of the BACnet gateway 130. Further, a resetting operation is required whenever a new sub-system or new device is added or an existing sub-system or device is removed, thereby causing inconvenience to a system manager in operating the building management system.

Therefore, it is an object of the present invention to provide a method and apparatus for automatically recognizing a connection of a device to a building management system which is capable of automatically recognizing a device when the device is connected, added to or removed from a certain communication port that is included in a BACnet gateway of the building management system, thereby providing convenience to a user and an installer and increasing operational efficiency of the building management system.

To achieve these and other advantages and in accordance with the purpose of the present invention, as embodied and broadly described herein, there is provided a method for automatically recognizing the connection of a device to a building management system, comprising: transmitting a request signal through a communication port built into a BACnet gateway for checking a device connection; checking for a response signal with respect to the request signal; and if the response signal is received, recognizing that the device is connected to the communication port. Based on the recognition result, a recognition number is provided to the connected device, and a first table is written based on the recognition number. In addition, based on the written first table, communication is performed with the connected device.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate preferred embodiments of the invention and together with the description serve to explain the principles of the invention.

In the drawings:
Figure 1 is a block diagram which schematically illustrates the structure of a related art building management system;
Figure 2 is a flowchart illustrating a method for automatically recognizing a device of a building management system according to the present invention; and
Figure 3 is a block diagram which schematically illustrates an apparatus for automatically recognizing a device of a building management system according to the present invention.

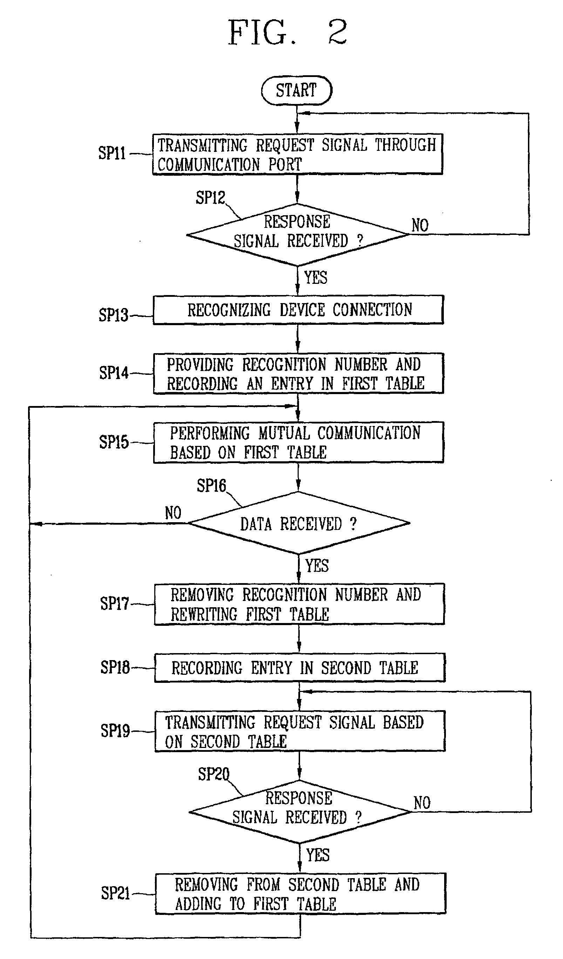

Description will now be given in detail of the method for automatically recognizing a device of a building management system according to the present invention with reference to Fig. 2 which is a flowchart illustrating the method for automatically recognizing a device of a building management system according to the present invention.

As shown in the drawing, the method for automatically recognizing a connection of a device according to the present invention includes: transmitting a request signal from a communication port of a BACnet gateway (SP11), determining whether a response signal has been received at the communication port responsive to the request signal (SP12), and if a response signal has been received, recognizing that the device is connected to the communication port (SP13).

A central control system of the building management system transmits a request signal through the communication port built into the BACnet gateway for checking the device connection (SP11). Upon receiving the request signal, a device connected to the port transmits a response signal in response to the request signal. In addition, the central control system determines whether or not a response signal is received in response to the request signal (SP12), and if the response signal is received, recognizes that the device is connected through the communication port (SP13). If the central control system has not received a response signal from the device in response to the request signal, the central control system re-transmits the request signal a certain number of times. Here, a communication format of the request signal and the response signal is determined by a communication protocol established among the central control system, the BACnet gateway and each of the devices, and the certain number of times can be set as 3 times, 5 times, or the like by a user or an installer.

The method according to the present invention may further include the steps of assigning a connected device a recognition number, and recording an entry based on the recognition number in a first table (SP14), and, based on the first table, performing communication with the device based on the entry in the first table (SP15). That is, if the device is recognized to be connected, the central control system assigns to the device a recognition number, and records an entry in a first table based on the recognition number, and then, based on the entry in the first table, performs communication with the connected device through the BACnet gateway (SP15). In the communication method, the central control system may individually perform communication with each of the devices that are recorded in the first table, or may control a group of devices based on entries of connected devices recorded in the first table. Here, the recognition number may correspond to a unique network address, and the like for classifying each of the respective connected devices.

The method according to the present invention may further include the steps of, while performing the communication, and if there is no data received from the device, removing the recognition number for the device that has no data from the first table, and then rewriting the first table (SP16 and SP17). Based on the first table, the communication is performed between the central control system and the devices connected to the central control system. That is, while data is being sent and received, and if there is no data received from a device, the device is determined to be disconnected, and thus the recognition number of the connected device recorded in the first table is removed and the first table is updated (SP16 and SP17). In addition, the central control system records an entry, based on the recognition number for the device removed from the first table in a second table (SP18).

The method according to the present invention may further include the steps of transmitting a request signal based on the entry in the second table (SP19), determining whether a response signal has been received responsive to the request signal (SP20), and if the response signal is received, recognizing that the device is connected to the communication port, removing the entry from the second table and adding an entry of the connected device back into the first table (SP21). That is, in order to determine whether the device that was once connected but disconnected is again connected, the central control system transmits the request signal based on the second table, thereby re-performing the procedure for automatically recognizing the device.

Accordingly, the method for automatically recognizing a device of a building management system according to the present invention sends and receives data through communication with a connected device based on an entry of the first table, and continues to check whether the device is connected based on the second table. Here, the first and second tables may be composed or constructed in the form of a database (DB), a file, or the like.

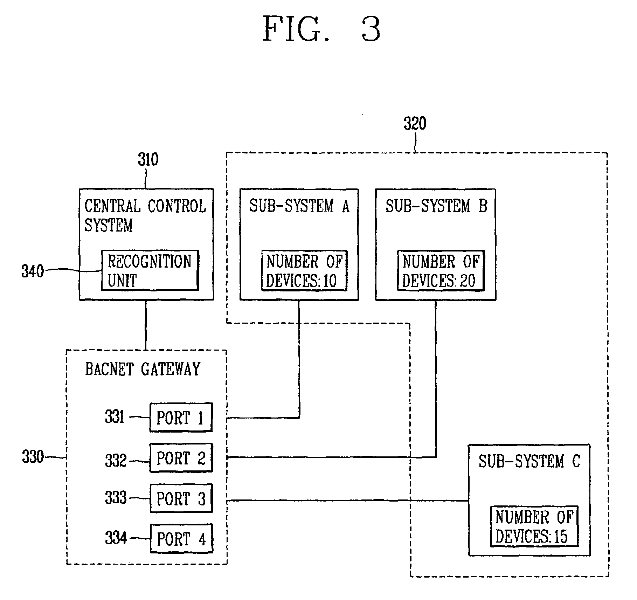

The method according to the present invention can be generally performed in the central control system, but can also be performed through the BACnet gateway or a separate device (e.g., a recognition unit in Fig. 3 to be described below).

Hereinafter, the apparatus for automatically recognizing a device of the building management system according to the present invention will be described in detail with reference to Fig. 3.

Figure 3 schematically illustrates the apparatus for automatically recognizing a connection of a device to a building management system according to the present invention.

As shown in Fig. 3, the apparatus for automatically recognizing a device according to the present invention augments the related art building management system including a central control system 310 for performing a central control function for sub-systems, such as power, lighting, etc. that are networked to each other and installed inside the building, the plurality of sub-systems 320 for managing lighting, an air conditioning system, security, etc. of the building, and a BACnet gateway 330 serving as a connection path between the central control system 310 and the sub-systems 320 such that the central control system 310 can centrally control the sub-systems 320 by further including a recognition unit 340 which may be included in the central control system 310 or implemented in the BACnet gateway 330 or as a separate device.

The recognition unit transmits a request signal for checking the device connection from a communication port of a BACnet gateway, determines whether a response signal has been received at the communication port responsive to the request signal, and recognizes that the device is connected to the communication port if a response signal has been received. Also, the recognition unit may retransmit the request signal a certain number of times if a response signal is not received.

In addition, the apparatus for automatically recognizing a device according to the present invention assigns the connected device a recognition number, and records an entry based on the recognition number in a first table. Here, the apparatus may control a group of devices based on entries of connected devices recorded in the first table. While communication is being performed with the device as thusly recorded in the first table, if there is no data received, the apparatus records an entry based on the device that has no data in a second table. The recognition unit removes the entry from the first table, if data is not received from the device during the communication between the BACnet gateway and the device. Here, the recognition number corresponds to a network address, and the like for classifying each device.

In addition, the apparatus for automatically recognizing a device according to the present invention may further include a storage unit for storing the first table and the second table, and a control unit for recognizing whether the device is connected so as to provide the connected device with a recognition number and for performing communication with the device based on the recognition number. The storage unit stores the first table in which an entry is recorded based on the recognition number. Also, the storage unit further includes the second table, and the apparatus records an entry based on the recognition number in the second table when the entry is removed from the first table. Here, the first table and the second table may be composed in the form of a database (DB), a file, or the like. A hard disk, a memory and the like can be used for the storage unit.

The recognition unit transmits a request signal based on the entry in the second table, determines whether a response signal has been received responsive to the request signal, and recognizes that the device is connected to the communication port if a response signal is received. Also, the recognition unit removes the entry from the second table and adds an entry of the connected device to the first table.

The method and apparatus according to the present invention can also be applied to sub-systems including a plurality of devices.

Therefore, a building management system implementing the method for automatically recognizing a device according to the present invention may be initially constructed regardless of the number of sub-systems or devices, and even though a new sub-system or device is added or an existing sub-system or device is removed while the building management system is being operated, the building management system can automatically recognize the concerned sub-system or device by repeatedly performing the above-mentioned procedures periodically.

As so far described, the method and apparatus for automatically recognizing a device of a building management system according to the present invention can provide convenience to the user and the installer and increase the operational efficiency of the building management system by continually performing an automatic recognition of a device when the device is connected, added to or removed from a certain communication port that is built into the BACnet gateway.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A method for automatically recognizing a connection of a device to a building management system, **characterized by** comprising:
- transmitting a request signal from a communication port of a BACnet gateway (SP11);
- determining whether a response signal, responsive to the request signal, has been received at the communication port (SP12);
- upon receiving a response signal; recognizing that the device is connected to the communication port (SP13), assigning the device a recognition number (SP14), and recording an entry based on the recognition number in a first table (SP14);
- performing communication with the device based on the entry in the first table (SP15);
- upon detecting that data is not received from the device during the communication: removing the entry from the first table (SP16, SP17); and
- recording an entry based on the recognition number in a second table when the entry is removed from the first table (SP18).

2. The method of claim 1, further comprising:
transmitting a request signal based on the entry in the second table (SP19);
determining whether a response signal, responsive to the request signal, has been received (SP20); and
if a response signal is received, recognizing that the device is connected to the communication port.

3. The method of claim 2, further comprising:
removing the entry from the second table (SP21); and
adding an entry of the connected device to the first table.

4. The method of any of claims 1 to 3, further comprising:
controlling a group of devices based on entries of connected devices recorded in the first table.

5. The method of any of claims 1 to 4, wherein the recognition number is a network address.

6. The method of any of claims 1 to 5, further comprising:
if a response signal is not received, re-transmitting the request signal a certain number of times.

7. An apparatus for automatically recognizing a connection of a device to a building management system, **characterized by** comprising
a recognition unit (340) adapted to transmit a request signal from a communication port (331, 332, 333, 334) of a BACnet gateway (330), to determine whether a response signal, responsive to the request signal, has been received at the communication port (331, 332, 333, 334), and to recognize that the device is connected to the communication port (331, 332, 333, 334) upon receiving a response signal;
a control unit adapted to assign the device a recognition number; and
a storage unit adapted to store a first table in which an entry is recorded based on the recognition number,
wherein the recognition unit (340) is adapted to remove the entry from the first table, upon detecting that data is not received from the device during a communication between the BACnet gateway and the device,
and wherein the storage unit further comprises a second table, and the apparatus is adapted to record an entry based on the recognition number in the second table when the entry is removed from the first table.

8. The apparatus of claim 7, wherein the recognition unit (340) is adapted to transmit a request signal based on the entry in the second table, to determine whether a response signal, responsive to the request signal, has been received, and to recognize that the device is connected to the communication port (331, 332, 333, 334) if a response signal is received.

9. The apparatus of claim 8, wherein the recognition unit (340) is adapted to remove the entry from the second table and to add an entry of the connected device to the first table.

10. The apparatus of any of claims 7 to 9, being adapted to control a group of devices based on entries of connected devices recorded in the first table.

11. The apparatus of any of claims 7 to 10, wherein the recognition number is a network address.

12. The apparatus of any of claims 7 to 11, wherein the recognition unit (340) is adapted to retransmit the request signal a certain number of times if a response signal is not received.

## Patentansprüche

1. Verfahren zur automatischen Erkennung einer Verbindung einer Vorrichtung mit einem Gebäudeverwaltungssystem, **dadurch gekennzeichnet, dass** es aufweist:
- Senden eines Anforderungssignals von einem Kommunikationsanschluss eines BACnet-Gateway (SP11);
- Bestimmen, ob an dem Kommunikationsanschluss ein Antwortsignal als Antwort auf das Anforderungssignal empfangen wurde (SP12);
- nach Empfang eines Antwortsignals: Erkennen, dass die Vorrichtung mit dem Kommunikationsanschluss verbunden ist (SP13), Zuweisen einer Erkennungsnummer an die Vorrichtung (SP14), und basierend auf der Erkennungsnummer Aufzeichnen eines Eintrags in einer ersten Tabelle (SP14);
- Durchführen der Kommunikation mit der Vorrichtung basierend auf dem Eintrag in der ersten Tabelle (SP15);
- nach dem Erfassen, dass während der Kommunikation von der Vorrichtung keine Daten empfangen werden: Entfernen des Eintrags aus der ersten Tabelle (SP16, SP17); und
- Aufzeichnen eines Eintrags basierend auf der Erkennungsnummer in einer zweiten Tabelle, wenn der Eintrag aus der ersten Tabelle entfernt wird (SP18).

2. Verfahren nach Anspruch 1, das ferner aufweist:
Senden eines Anforderungssignals basierend auf dem Eintrag in der zweiten Tabelle (SP19);
Bestimmen, ob ansprechend auf das Anforderungssignal ein Antwortsignal empfangen wurde (SP20); und
wenn ein Antwortsignal empfangen wird, Erkennen, dass die Vorrichtung mit dem Kommunikationsanschluss verbunden ist.

3. Verfahren nach Anspruch 2, das ferner aufweist:
Entfernen des Eintrags aus der zweiten Tabelle (SP21); und
Hinzufügen eines Eintrags der verbundenen Vorrichtung zu der ersten Tabelle.

4. Verfahren nach einem der Ansprüche 1 bis 3, das ferner aufweist:
Steuern einer Gruppe von Vorrichtungen basierend auf Einträgen der verbundenen Vorrichtungen, die in der ersten Tabelle aufgezeichnet sind.

5. Verfahren nach einem der Ansprüche 1 bis 4, wobei die Erkennungsnummer eine Netzwerkadresse ist.

6. Verfahren nach einem der Ansprüche 1 bis 5, das ferner aufweist:
wenn kein Antwortsignal empfangen wird, eine gewisse Anzahl von Malen erneutes Senden des Anforderungssignals.

7. Vorrichtung zur automatischen Erkennung einer Verbindung einer Vorrichtung mit einem Gebäudeverwaltungssystem, **dadurch gekennzeichnet, dass** sie aufweist:
eine Erkennungseinheit (340), die geeignet ist, ein Anforderungssignal von einem Kommunikationsanschluss (331, 332, 333, 334) eines BACnet-Gateway (330) zu senden, zu bestimmen, ob an dem Kommunikationsanschluss (331, 332, 333,334) ansprechend auf das Anforderungssignal ein Antwortsignal empfangen wurde, und nach Empfang eines Antwortsignals zu erkennen, dass die Vorrichtung mit dem Kommunikationsanschluss (331, 332, 333, 334) verbunden ist;
eine Steuereinheit, die geeignet ist, eine Erkennungsnummer an die Vorrichtung zuzuweisen; und
eine Speichereinheit, die geeignet ist, eine erste Tabelle zu speichern, in der basierend auf der Erkennungsnummer ein Eintrag aufgezeichnet wird,
wobei die Erkennungseinheit (340) geeignet ist, nach der Erfassung, dass während einer Kommunikation zwischen dem BACnet-Gateway und der Vorrichtung von der Vorrichtung keine Daten empfangen werden, den Eintrag aus der ersten Tabelle zu entfernen,
und wobei die Speichereinheit ferner eine zweite Tabelle aufweist, und die Vorrichtung geeignet ist, basierend auf der Erkennungsnummer einen Eintrag in der zweiten Tabelle aufzuzeichnen, wenn der Eintrag aus der ersten Tabelle entfernt wird.

8. Vorrichtung nach Anspruch 7, wobei die Erkennungseinheit (340) geeignet ist, basierend auf dem Eintrag in der zweiten Tabelle ein Anforderungssignal zu senden, zu bestimmen, ob ansprechend auf das Anforderungssignal ein Antwortsignal empfangen wurde, und, wenn ein Antwortsignal empfangen wird, zu erkennen, dass die Vorrichtung mit dem Kommunikationsanschluss (331, 332, 333, 334) verbunden ist.

9. Vorrichtung nach Anspruch 8, wobei die Erkennungseinheit (340) geeignet ist, den Eintrag aus der zweiten Tabelle zu entfernen und einen Eintrag der verbundenen Vorrichtung zu der ersten Tabelle hinzuzufügen.

10. Vorrichtung nach einem der Ansprüche 7 bis 9, die geeignet ist, eine Gruppe von Vorrichtungen basierend auf Einträgen verbundener Vorrichtungen zu steuern, die in der ersten Tabelle aufgezeichnet sind.

11. Vorrichtung nach einem der Ansprüche 7 bis 10, wobei die Erkennungsnummer eine Netzwerkadresse ist.

12. Vorrichtung nach einem der Ansprüche 7 bis 11, wobei die Erkennungseinheit (340) geeignet ist, das Anforderungssignal eine gewisse Anzahl von Malen erneut zu senden, wenn kein Antwortsignal empfangen wird.

## Revendications

1. Procédé pour reconnaître automatiquement une connexion d'un dispositif à un système de gestion d'immeubles, **caractérisé en ce qu'**il comprend :
- la transmission d'un signal de demande depuis un port de communication d'une passerelle BACnet (SP11) ;
- la détermination d'un signal de réponse, réceptif au signal de demande, reçu ou non au niveau du port de communication (SP12) ;
- lors de la réception d'un signal de réponse : la reconnaissance que le dispositif est connecté au port de communication (SP13), l'attribution au dispositif d'un numéro de reconnaissance (SP14), et l'enregistrement d'une entrée sur la base du numéro de reconnaissance dans une première table (SP 14) ;
- l'exécution d'une communication avec le dispositif sur la base de l'entrée dans la première table (SP15) ;
- lors de la détection selon laquelle des données ne sont pas reçues en provenance du dispositif pendant la communication : la suppression de l'entrée de la première table (SP16, SP17) ; et
- l'enregistrement d'une entrée sur la base du numéro de reconnaissance dans une seconde table lorsque l'entrée est supprimée de la première table (SP18).

2. Procédé selon la revendication 1, comprenant :
la transmission d'un signal de demande sur la base de l'entrée dans la seconde table (SP19) ;
la détermination d'un signal de réponse, réceptif au signal de demande, reçu ou non (SP20) ; et
si un signal de réponse est reçu, la reconnaissance que le dispositif est connecté au port de communication.

3. Procédé selon la revendication 2, comprenant :
la suppression de l'entrée de la seconde table (SP21) ; et
l'ajout d'une entrée du dispositif connecté à la première table.

4. Procédé selon l'une quelconque des revendications 1 à 3, comprenant :
la commande d'un groupe de dispositifs sur la base d'entrées de dispositifs connectés enregistrées dans la première table.

5. Procédé selon l'une quelconque des revendications 1 à 4, dans lequel le numéro de reconnaissance est une adresse réseau.

6. Procédé selon l'une quelconque des revendications 1 à 5, comprenant :
si un signal de réponse n'est pas reçu, la retransmission du signal de demande un certain nombre de fois.

7. Appareil pour reconnaître automatiquement une connexion d'un dispositif à un système de gestion d'immeubles, **caractérisé en ce qu'**il comprend :
une unité de reconnaissance (340) adaptée pour transmettre un signal de demande depuis un port de communication (331, 332, 333, 334) d'une passerelle BACnet (330), pour déterminer si un signal de réponse, réceptif au signal de demande, a été reçu ou non au niveau du port de communication (331, 332, 333, 334), et pour reconnaître que le dispositif est connecté au port de communication (331, 332, 333, 334) lors de la réception d'un signal de réponse ;
une unité de commande adaptée pour attribuer au dispositif un numéro de reconnaissance ; et
une unité de stockage adaptée pour stocker une première table dans laquelle une entrée est enregistrée sur la base du numéro de reconnaissance,
dans lequel l'unité de reconnaissance (340) est adaptée pour supprimer l'entrée de la première table lors de la détection selon laquelle des données ne sont pas reçues en provenance du dispositif pendant une communication entre la passerelle BACnet et le dispositif,
et dans lequel l'unité de stockage comprend une seconde table, et l'appareil est adapté pour enregistrer une entrée sur la base du numéro de reconnaissance dans la seconde table lorsque l'entrée est supprimée de la première table.

8. Appareil selon la revendication 7, dans lequel l'unité de reconnaissance (340) est adaptée pour transmettre un signal de demande sur la base de l'entrée dans la seconde table, pour déterminer si un signal de réponse, réceptif au signal de demande, a été reçu ou non, et pour reconnaître que le dispositif est connecté au port de communication (331, 332, 333, 334) si un signal de réponse est reçu.

9. Appareil selon la revendication 8, dans lequel l'unité de reconnaissance (340) est adaptée pour supprimer l'entrée de la seconde table et pour ajouter une entrée du dispositif connecté à la première table.

10. Appareil selon l'une quelconque des revendications 7 à 9, adapté pour commander un groupe de dispositifs sur la base d'entrées de dispositifs connectés enregistrées dans la première table.

11. Appareil selon l'une quelconque des revendications 7 à 10, dans lequel le numéro de reconnaissance est une adresse réseau.

12. Appareil selon l'une quelconque des revendications 7 à 11, dans lequel l'unité de reconnaissance (340) est adaptée pour retransmettre le signal de demande un certain nombre de fois si un signal de réponse n'est pas reçu.
